(19) Europäisches Patentamt
European Patent Office
Office européen des brevets

(11) **EP 1 856 964 B1**

(12) **EUROPÄISCHE PATENTSCHRIFT**

(45) Veröffentlichungstag und Bekanntmachung des Hinweises auf die Patenterteilung:
**29.09.2010   Patentblatt 2010/39**

(51) Int Cl.:
*A01B 49/06* *(2006.01)*   *A01C 7/20* *(2006.01)*
*A01B 63/24* *(2006.01)*

(21) Anmeldenummer: **07006588.3**

(22) Anmeldetag: **29.03.2007**

(54) **Sämaschine**

Seeder

Semoir

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **17.05.2006   DE 202006007920 U**

(43) Veröffentlichungstag der Anmeldung:
**21.11.2007   Patentblatt 2007/47**

(73) Patentinhaber: **Alois Pöttinger Maschinenfabrik Ges. m.b.H.**
**4710 Grieskirchen (AT)**

(72) Erfinder:
• **Stadlbauer, Franz**
**4633 Kematen (AT)**
• **Preimess, Hans-Jörg**
**9811 Lendorf 15 (AT)**

(74) Vertreter: **Thoma, Michael et al**
**Lorenz - Seidler - Gossel**
**Widenmayerstraße 23**
**80538 München (DE)**

(56) Entgegenhaltungen:
**EP-A2- 0 380 020        DE-A1- 3 933 345**
**DE-A1- 19 633 119       DE-U1- 9 002 699**
**DE-U1-202004 007 238**

EP 1 856 964 B1

## Beschreibung

Die vorliegende Erfindung betrifft eine Sämaschine gemäß dem Oberbegriff des Anspruchs 1, mit zumindest einer Packerwalze, die eine Reihe von Packerrädern umfasst, sowie zumindest einer Reihe von Austragselementen zum Ausbringen von Saatgut, Dünger und dergleichen, die quer zur Fahrtrichtung voneinander beabstandet angeordnet sind, wobei die Austragselemente jeweils in der Spur eines Packerrades angeordnet sind.

Bei Sämaschinen wirken die Packerräder der Packerwalze und die Austragselemente in Form von Särohren oder Säscharen üblicherweise dergestalt zusammen, dass die Austragselemente das Austragsgut, das üblicherweise Saatgutkörner umfasst, aber auch Dünger oder ein anderes chemisches Behandlungsmittel sein kann, in den Wirkbereichen der Packerräder ausbringen, d.h. in den Fahrspuren der Packerräder, in denen die Packerräder den Boden verdichten. Dies bedingt, dass die Austragselemente nicht in den Freiräumen zwischen den Packerrädern, sondern in den Spuren der Packerräder angeordnet sind. Hierdurch ist die Anordnung der Austragselemente in gewissem Maße durch die Anordnung der Packerräder vorgegeben. Andererseits verlangen verschiedene Säaufgaben oftmals nach verschiedenen Säschar- bzw. Särohrkonfigurationen. Insbesondere kann nicht jedes Saatgut in demselben Reihenabstand ausgebracht werden, beispielsweise verlangt Mais einen anderen Reihenabstand als beispielsweise Weizen. Diese Problematik wurde bislang im wesentlichen dadurch gelöst, dass für solchermaßen verschiedene Säaufgaben verschiedene Sämaschinen mit jeweils geeigneter Konfiguration von Packerrädern und Austragselementen eingesetzt wurden.

In der DE 197 31 862 A1 ist bereits eine an verschiedene Säaufgaben anpassbare Sämaschine vorgeschlagen, bei der zwei in Fahrtrichtung hintereinander angeordnete Säscharreihen zueinander tiefeneinstellbar sind, so dass das Saatgut in jeweils passender Tiefe im Boden ablegbar ist. Dies dient jedoch eher einer Anpassung an die Bodenverhältnisse und der Wahl der Sämethode. Die erforderlichen Anpassungen an verschiedenes Saatgut sind hierdurch nicht erreichbar. Weiterhin beschreibt die DE 198 82 236 T1 eine Sämaschine zum gleichzeitigen Säen von unterschiedlichen Arten von Produkten. Hierzu wird in der genannten Schrift vorgeschlagen, an der Säschar mehrere Austragsrohre enden zu lassen, deren Beschickung über einen vorgeschalteten Saatgutverteiler gesteuert werden kann. Weiterhin zeigt die EP 0 380 020 eine Bodenwalze zum Einsatz in einer Sämaschine, deren Gummireifen in Fahrtrichtung gesehen fluchtend vor den Säscharen angeordnet sind, wobei durch Lösen von Klemmlaschen die Gummireifen in verschiedenen Abständen zueinander anzuordnen sind.

Hiervon ausgehend liegt der vorliegenden Erfindung die Aufgabe zugrunde, eine verbesserte Sämaschine der genannten Art zu schaffen, die Nachteile des Standes der Technik vermeidet und letzteren in vorteilhafter Weise weiterbildet. Insbesondere soll eine variablere Saatgutaustragsanpassung mit einfachen Mitteln erreicht werden.

Erfindungsgemäß wird diese Aufgabe durch eine Sämaschine gemäß Anspruch 1 gelöst. Bevorzugte Ausgestaltungen der Erfindung sind Gegenstand der abhängigen Ansprüche.

Es wird also vorgeschlagen, die Sämaschine derart auszubilden, dass die Anzahl der den Austrag bewirkenden Austragselemente und der Reihenabstand zwischen benachbarten Austragselementen quer zur Fahrtrichtung veränderbar sind. Insbesondere ist diese Veränderbarkeit der Anzahl und des Reihenabstands der Austragselemente bei einer gleich bleibenden Packerwalzen- und Packerräderanordnung vorgesehen. Ohne Veränderungen an der Packerwalze vornehmen zu müssen, insbesondere ohne Austausch der Packerwalze, ist die Maschine hinsichtlich ihrer Anzahl der Austragselemente und ihres Reihenabstands der Austragselemente veränderbar. Mit anderen Worten sind einer vorbestimmten Packerwalzenanordnung verschiedene Säschar- bzw. Särohrkonfigurationen zuordenbar. Die Veränderbarkeit ist dabei insbesondere derart ausgebildet, dass trotz der Veränderbarkeit an sich in den verschiedenen Konfigurationen sichergestellt ist, dass die Austragselemente einerseits in der Spur eines Packerrades positioniert sind und dass andererseits eine gleichmäßige Teilung zwischen den aktiven Austragselementen eingehalten werden kann, um eine gleichmäßige Aussaat zu erreichen. Erfindungsgemäß ist vorgesehen, dass die Packerreifen eine Breite $b_{Rad}$ besitzen, die folgender Beziehung genügt:

$$b_{Rad} = \left( \frac{R_z}{n_{Rad}} - 1 \right) \bullet \frac{B}{R_z} + 2 \bullet \ddot{U},$$

wobei

$R_z$ die Reihenanzahl, $n_{Rad}$ die Packerradanzahl, B die Packerwalzen- bzw. Arbeits- oder Maschinenbreite und Ü die geforderte Spurüberlappung der Packerräder ist. Als Spurüberlappung ist dabei der Betrag der Breite zu verstehen, den das jeweilige Packerrad mit dem Rand seiner Auflagefläche quer zur Fahrtrichtung betrachtet über das ihm am nächsten kommende Austragselement der in seiner Spur laufenden Austragselemente übersteht. Betrachtet man oben genannte Gleichung in umgekehrter Richtung, ergibt sich eine Abhängigkeit der Reihenanzahl von der Pakkerräderanzahl bei gegebener Packerradbreite. Die Sämaschine besitzt also verschiedene Austragselementekonfigurationen, deren verschiedene Reihenanzahl jeweils ein ganzzahliges Vielfaches der Packerräderanzahl ist, wobei auch der Multiplikator 1 eingeschlossen sein kann, d.h. die Reihenanzahl der Packerräderanzahl entsprechen kann.

In Weiterbildung der Erfindung sind die Austragselemente relativ zu einem jeweiligen Packerrad an verschiedenen Stellen quer zur Fahrtrichtung positionierbar. Die Austragselemente sind dabei stets in der Spur des jeweiligen Packerrades, können jedoch je nach Reihenanzahl an verschiedenen Positionen relativ zu dem zugehörigen Packerrad plaziert werden.

Dies kann in Weiterbildung der Erfindung dadurch erreicht werden, dass die Austragselemente quer zur Fahrtrichtung verschiebbar gelagert sind. Vorteilhafterweise sind die Austragselemente dabei von einer ersten vorbestimmten Position zu einer zweiten bzw. weiteren vorbestimmten Position bewegbar, so dass eine einfache Einstellbarkeit erreicht wird. Alternativ oder zusätzlich zu einer translatorischen Verschiebbarkeit kann auch eine verschwenkbare Lagerung der Austragselemente quer zur Fahrtrichtung vorgesehen sein, oder allgemein eine quer zur Fahrtrichtung verstellbare Lagerung, die im einfachsten Fall darin bestehen kann, dass zumindest einzelne Austragselemente in verschiedene Positionen quer zur Fahrtrichtung umsetzbar sind. Eine vorzugsweise stufenlose oder auch stufenweise Verschiebbarkeit besitzt jedoch besondere Vorteile hinsichtlich einer einfachen Handhabung und Einstellung der Maschine.

Alternativ oder zusätzlich zu einer verstellbaren Lagerung der Austragselemente kann die Sämaschine auch einen modularen Aufbau besitzen. Insbesondere können die Austragselemente Teil eines Austragsmoduls sein, das austauschbar nach Art eines Wechselaufsatzes mit einem die Packerwalze umfassenden Maschinenmodul verbindbar ist. Hierzu können zwischen der Packerwalze und den Austragselementen bzw. dem die Packerwalze umfassenden Maschinenmodul und dem Austragsmodul lösbare Kupplungsmittel vorgesehen sein, mittels derer verschiedene Austragsmodule mit unterschiedlichen Reihenabständen zwischen den Austragselementen an das Packerwalzenmodul angeschlossen werden können.

Vorteilhafterweise sind die verschiedenen vorbestimmten Austragselementekonfigurationen derart ausgebildet, dass sie bei Zuordnung zu derselben Packerwalzenanordnung eine zu den Packerwalzenrädern symmetrische Anordnung der Austragselemente besitzen, in der die jeweils in der Spur eines Packerrades angeordneten Austragselemente zu der Spurmitte des jeweiligen Packerrades symmetrisch angeordnet sind. Gegebenenfalls kann in der Spur eines Packerrades auch nur ein einziges Austragselement angeordnet sein, wobei dieses dann in der Spurmitte liegt. Sind mehrere Austragselemente in der Spur eines Packerrades angeordnet, sind diese symmetrisch zur Spurmitte des jeweiligen Packerrades verteilt. Durch eine solche symmetrische Anordnung ergibt sich ungeachtet der Variabilität der Reihenabstände und der Anzahlen der Austragselemente stets ein gleichmäßiger Saatgutaustrag.

Insbesondere kann in Weiterbildung der Erfindung ungeachtet einer Veränderung des Reihenabstands von einer Konfiguration zu einer nächsten Konfiguration zwischen den Auftragselementen eine gleichmäßige Teilung quer zur Fahrtrichtung vorgesehen sein. Zwischen allen zueinander benachbarten Austragselementen kann quer zur Fahrtrichtung jeweils derselbe Abstand voneinander vorgesehen sein.

Um trotz der Variabilität der Reihenabstände und der Positionierung der Austragselemente an verschiedenen Stellen relativ zu einem Packerrad bzw. dessen Spur stets gleichmäßige und vergleichbare Austragsbedingungen zu schaffen, ist in Weiterbildung der Erfindung vorgesehen, dass die Packerreifen über ihre Auflagebreite ein im wesentlichen gleichmäßiges Profil besitzen. Insbesondere können die Pakkerreifen über ihre Auflagebreite ein neutrales Profil ohne Teilungen besitzen. Durch allenfalls geringe Profilhöhen und allenfalls kleinere Vorsprünge bzw. Vertiefungen erzielen die Packerreifen über die Auflagebreite betrachtet eine einigermaßen gleichmäßige Bodenverdichtung, so dass der Saatgutaustrag gleichmäßigen Bedingungen unterworfen ist, auch wenn der Punkt des Saatgutaustrags quer zur Spur verschoben wird.

In Weiterbildung der Erfindung sind die verschiedenen Austragselementekonfigurationen der Sämaschine derart ausgebildet, dass die Reihenanzahl pro Packerrad $r_z$ der folgenden Beziehung genügt:

$$\frac{x_{rz+1}}{x_{rz}} = \frac{rz}{rz+1},$$

wobei x der Reihenabstand bei der jeweiligen Reihenanzahl ist. Für die Reihenanzahl pro Packerrad $r_z$ gilt dabei

$$rz = \frac{R_z}{n_{Rad}}.$$

Die Erfindung wird nachfolgend anhand eines bevorzugten Ausführungsbeispiels und zugehöriger Zeichnungen näher erläutert. In den Zeichnungen zeigen:

Fig. 1: eine schematische Seitenansicht einer Sämaschine mit einer Packerwal- ze und einer dieser nachgeschalteten Säschareinheit nach einer bevor- zugten Ausführung der Erfindung,

Fig. 2: eine schematische Draufsicht auf die Sämaschine aus Fig. 1 in einer ersten Austragselementekonfiguration mit 24 Austragselementen hinter sechs Packerrädern,

Fig. 3: eine schematische Draufsicht auf die Sämaschine aus Fig. 1 mit einer veränderten Austragselementekonfiguration mit 18 Austragselementen hinter den sechs Packerrädern, und

Fig. 4: eine schematische Draufsicht auf die Sämaschine aus Fig. 1 mit einer nochmals veränderten Austragselementekonfiguration mit nur noch sechs Austragselementen hinter den sechs Packerrädern.

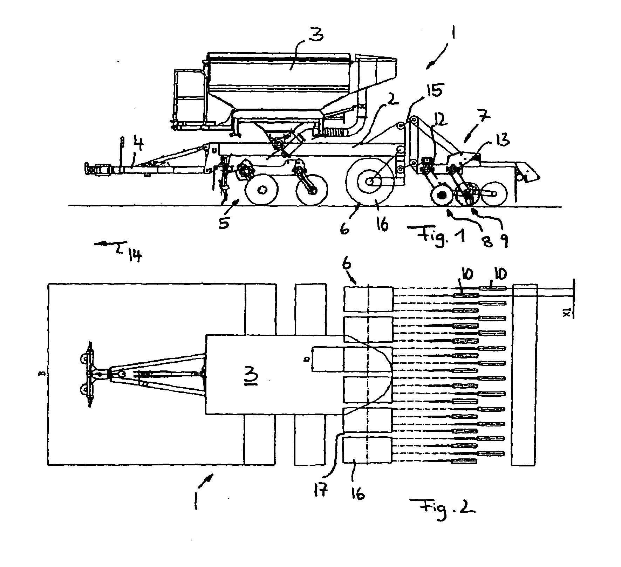

Die in Figur 1 gezeigte Sämaschine 1 umfasst in an sich bekannter Weise einen Maschinenrahmen 2, der einen Saatgutspeicher 3 trägt und über eine Deichsel 4 an einen Schlepper ankuppelbar ist, wobei es sich jedoch versteht, dass die Sämaschine auch selbstfahrend ausgebildet sein könnte. Bei der gezeichneten Ausführung ist in Fahrtrichtung betrachtet eine zweireihige Scheibenegge 5 einer Packerwalze 6 vorgeschaltet, der wiederum ein Austrags- bzw. Sämodul 7 folgt. Das Sämodul 7 umfasst zwei Reihen 8 und 9 von Austragselementen 10 in Form von Säscharen bzw. Särohren, vgl. Figuren 1 und 2. Die Austragselemente 10 der beiden Austragsreihen 8 und 9 sind über ein nicht näher dargestelltes Kanal-, insbesondere Schlauchsystem mit dem Saatgutspeicher 3 verbunden und können von diesem aus mit entsprechendem auszubringenden Saatgut, Dünger, anderen chemischen Mitteln oder einem Gemisch hiervon beaufschlagt werden.

Wie Figur 1 zeigt, sind die Austragselemente 10 an einem Sämodulrahmen 11 befestigt, der zwei hintereinander angeordnete Querträger 12 und 13 aufweisen kann, mittels derer die Austragselemente 10 quer zur Fahrtrichtung in verschiedene Positionen bringbar sind. Alternativ oder zusätzlich zu einer solchen verschieblichen Lagerung der Austragselemente 10 ist das Sämodul 7 als Wechselmodul ausgebildet. Wie Figur 1 zeigt, sind zwischen dem die Packerwalze 6 tragenden Maschinenrahmenabschnitt 2 und dem Sämodul 7 Kupplungsmittel 15 vorgesehen, vorzugsweise in Form von Schnellkupplungsmitteln, mittels derer verschiedene Sämodule 7 mit verschiedenen Austragselementekonfigurationen an den Maschinenrahmen 2 ankuppelbar sind.

Die Packerwalze 6 besitzt in der gezeichneten Ausführung für alle Austragselementekonfigurationen dieselbe Anordnung von Packerrädern 16. In der gezeichneten Ausführung umfasst die Packerwalze 6 sechs Packerräder 16, die entlang einer gemeinsamen Achse angeordnet und voneinander durch einen Freiraum 17 beabstandet sind.

Wie die Figuren 2 bis 3 zeigen, sind die Austragselemente 10 ungeachtet ihrer verschiedenen Reihenabstände und -anzahlen quer zur Fahrtrichtung jeweils gleichmäßig voneinander geteilt und bezüglich der zugehörigen Packerräder 16 symmetrisch angeordnet. Die in einer Spur eines jeweiligen Packerrades 16 laufenden Austragselemente 10 sind bezüglich der Spurmitte dieses Packerrades 16 symmetrisch angeordnet. Dies gilt für alle Konfigurationen, in die die Austragselemente 10 des Sämoduls 7 bestimmungsgemäß bringbar sind.

Wie die Figuren 2 bis 4 zeigen, ist grundsätzlich die Packerradbreite $b_{Rad}$ so gewählt, dass mit einem minimalen Reihenabstand x mindestens eine Reihe bzw. maximal beliebig viele Reihen vorverdichtet werden können. Dabei ist vorgesehen, dass die Packerradbreite $b_{Rad}$ und die Anzahl der Packerräder aufgrund der ganzzahligen Teilbarkeit der Reihenanzahl $R_z$ zu der Packerradzahl $n_{Rad}$ folgender Beziehung genügt:

$$\left(\frac{R_z}{n_{Rad}} - 1\right) \bullet \frac{B}{R_z} + 2 \bullet \text{Überlappung} = b_{Rad}$$

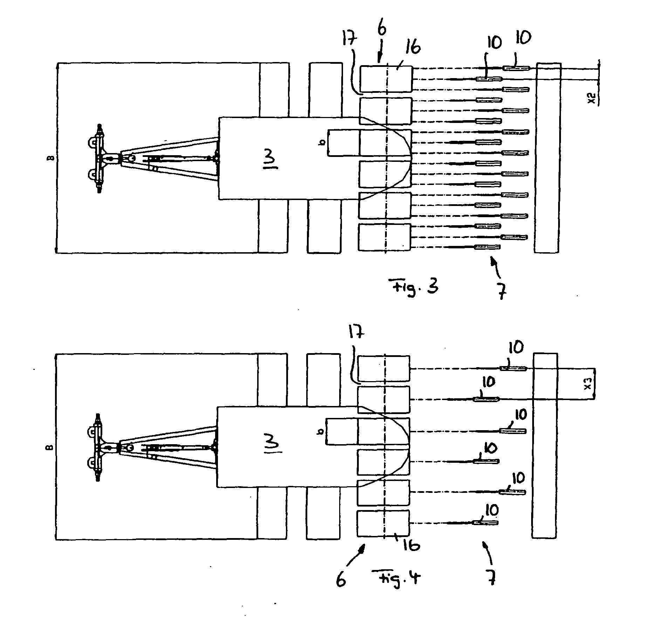

Da bei der gezeichneten Ausführung der Sämaschine die verschiedenen Austragselementeanordnungen derselben Packerwalzenanordnung zugeordnet werden sollen, ist vorgesehen, dass die unterschiedliche Reihenanzahl der Austragselemente 10 ein ganzzahliges Vielfaches der Packerräderanzahl ist, wobei als kleinste Lösung der Multiplikator 1 eingeschlossen ist und die Reihenanzahl der Packerräderanzahl entspricht, wie dies Figur 4 zeigt.

Unter der Voraussetzung, dass für die Reihenanzahl pro Packerrad $r_z$ die Beziehung

$$r_z = \frac{R_z}{n_{Rad}}$$

gilt, entspricht das Verhältnis der Reihenabstände x folgender Beziehung:

$$\frac{r_z}{r_{z+1}} = \frac{x_{r_z+1}}{x_{r_z}}$$

**Patentansprüche**

1. Sämaschine mit zumindest einer Packerwalze (6), die eine Reihe von Packerrädern (16) umfasst, sowie zumindest einer Reihe von Austragselementen (10) zum Ausbringen von Saatgut, Dünger und dergleichen, die quer zur Fahrtrichtung (14) voneinander beabstandet angeordnet sind, wobei die Austragselemente (10) jeweils in der Spur eines Packerrades (16) angeordnet sind und die Anzahl der Austragselemente (10) und der Reihenabstand (x) zwischen benachbarten Austragselementen (10) quer zur Fahrtrichtung (14) veränderbar sind, **dadurch gekennzeichnet, dass** die Packerräder (16) eine Breite ($b_{Rad}$) besitzen, die folgender Beziehung genügt:

$$b_{Rad} = \left( \frac{R_z}{n_{Rad}} - 1 \right) \bullet \frac{B}{R_z} + 2 \bullet \ddot{U},$$

wobei ($R_z$) die Reihenanzahl, ($n_{Rad}$) die Packerradanzahl, (B) die Maschinen- und/oder Arbeitsbreite der Maschine und ($\ddot{U}$) eine geforderte Spurüberlappung der Packerräder ist.

2. Sämaschine nach dem vorhergehenden Anspruch, wobei die Austragselemente (10) bei einer gleich bleibenden Packerwalzenanordnung in mehrere hinsichtlich des Reihenabstandes verschiedene Austragselementekonfigurationen bringbar sind.

3. Sämaschine nach einem der vorhergehenden Ansprüche, wobei die Austragselemente (10) relativ zu einem jeweiligen Packerrad (16) an verschiedenen Stellen quer zur Fahrtrichtung positionierbar sind.

4. Sämaschine nach einem der vorhergehenden Ansprüche, wobei die Austragselemente (10) quer zur Fahrtrichtung (14) verschiebbar gelagert sind.

5. Sämaschine nach einem der vorhergehenden Ansprüche, wobei zwischen einem die Packerwalze (6) umfassenden Maschinenabschnitt und einem die Austragselemente aufweisenden Austragsmodul (7) lösbare Kupplungsmittel (15) vorgesehen sind, mittels derer wahlweise verschiedene Austragsmodule (7), die verschiedene Anzahlen und Reihenabstände der Austragselemente (10) besitzen, an den die Packerwalze (6) aufweisenden Maschinenabschnitt anschließbar sind.

6. Sämaschine nach einem der vorhergehenden Ansprüche, wobei die Austragselemente (10) in mehrere, verschiedene Austragselementeanordnungen bringbar sind, in denen die in der Spur eines Packerrades (16) angeordneten Austragselemente (10) zu der Spurmitte des jeweiligen Packerrades (16) jeweils symmetrisch angeordnet sind.

7. Sämaschine nach einem der vorhergehenden Ansprüche, wobei die Austragselemente (10) in mehrere, verschiedene Austragselementeanordnungen bringbar sind, in denen zwischen den Austragselementen (10) jeweils eine gleichmäßige Teilung vorgesehen ist.

8. Sämaschine nach einem der vorhergehenden Ansprüche, wobei die Packerräder (16) über ihre Auflagebreite ein gleichmäßiges Profil, insbesondere ein neutrales Profil ohne Teilungen, besitzen.

9. Sämaschine nach einem der vorhergehenden Ansprüche, wobei die Reihenanzahl pro Packerrad ($r_z$) der folgenden Beziehung genügt:

$$\frac{r_z}{r_{z+1}} = \frac{x_{r_{z+1}}}{x_{r_z}},$$

wobei (x) der Reihenabstand zwischen zwei benachbarten Austragselementen (10) bei der jeweiligen Reihenanzahl ($r_z$) ist.

**Claims**

1. A seeder having at least one packer roller (6) which comprises a row of packer wheels (16) as well as having at least one row of delivery elements (10) for the output of seeds, fertiliser and the like which are arranged spaced apart from one another transversely to the direction of travel (14), wherein the delivery elements (10) are each arranged in the groove of a packer wheel (16) and the number of the delivery elements (10) and the row spacing (x) between adjacent delivery elements (10) transverse to the direction of travel (14) can be changed, **characterised in that** the packer wheels (16) have a width ($b_{Rad}$) which satisfies the following relationship:

$$\left( b_{Rad} = \frac{R_z}{n_{Rad}} - 1 \right) \bullet \frac{B}{R_z} + 2 \bullet \ddot{U},$$

where ($R_z$) is the number of rows, ($n_{Rad}$) is the number of packer wheels, (B) is the machine width and/or the working width of the machine and ($\ddot{U}$) is a required groove overlap of the packer wheels.

2. A seeder in accordance with the preceding claim, wherein the delivery elements (10) can be brought into a plurality of delivery element configurations differing with respect to the row spacing with an unchanging packer roller arrangement.

3. A seeder in accordance with one of the preceding claims, wherein the delivery elements (10) can be positioned at different positions transversely to the direction of travel relative to a respective packer wheel (10).

4. A seeder in accordance with one of the preceding claims, wherein the delivery elements (10) are displaceably supported transversely to the direction of travel (14).

5. A seeder in accordance with one of the preceding claims, wherein releasable coupling means (15) are provided between a machine section comprising the packer roller (6) and a delivery module (7) having the delivery elements and different delivery modules (7) which have different numbers and row spacings of the delivery elements (10) can be connected selectively to the machine section having the packer roller (6) by means of said coupling means.

6. A seeder in accordance with one of the preceding claims, wherein the delivery elements (10) can be brought into different delivery element arrangements in which the delivery elements (10) arranged in the groove of a packer wheel (16) are in each case arranged symmetrically to the groove centre of the respective packer wheel (16).

7. A seeder in accordance with one of the preceding claims, wherein the delivery elements (10) can be brought into a plurality of different delivery element arrangements in which a uniform division is in each case provided between the delivery elements (10).

8. A seeder in accordance with one of the preceding claims, wherein the packer wheels (16) have a uniform profile, in particular a neutral profile without divisions, over their contact width.

9. A seeder in accordance with one of the preceding claims, wherein the number of rows per packer wheel ($r_z$) satisfies the following relationship:

$$\frac{r_z}{r_{z+1}} = \frac{x_{rz+1}}{x_{rz}}$$

where (x) is the row spacing between two adjacent delivery elements (10) in the respective number of rows ($r_z$).

**Revendications**

1. Semoir comportant au moins un rouleau de tassage (6), qui comporte une rangée de roues de tassage (16), ainsi qu'au moins une rangée d'éléments semeurs (10) pour la dépose des semences, engrais et similaires, qui sont disposés à distance les uns des autres transversalement au sens de déplacement (14), lesdits éléments semeurs (10) étant disposés chacun dans la trace d'une roue de tassage (16), et le nombre d'éléments semeurs (10) et la distance (x) entre des éléments semeurs (10) adjacents transversalement au sens de déplacement (14) pouvant être modifiés, **caractérisé en ce que** les roues de tassage (16) ont une largeur ($b_{Rad}$) qui satisfait à la relation suivante:

$$b_{Rad} = \left( \frac{R_z}{n_{Rad}} - 1 \right) \bullet \frac{B}{R_z} + 2 \bullet \ddot{U},$$

dans laquelle ($R_z$) est le nombre de rangées, ($n_{Rad}$) est le nombre de roues de tassage, (B) est la largeur de la machine et/ou la largeur de travail et (Ü) est le chevauchement exigé de la trace des roues de tassage.

2. Semoir selon la revendication précédente, dans lequel les éléments semeurs (10), dans le cas d'un agencement constant du rouleau de tassage, peuvent être amenés dans plusieurs configurations, différentes par la distance entre les rangées.

3. Semoir selon l'une quelconque des revendications précédentes, dans lequel les éléments semeurs (10) peuvent être positionnés par rapport à une roue de tassage (16) respective en différents emplacements transversalement au sens de déplacement.

4. Semoir selon l'une quelconque des revendications précédentes, dans lequel les éléments semeurs (10) sont montés mobiles par rapport au sens de déplacement (14).

5. Semoir selon l'une quelconque des revendications précédentes, dans lequel il est prévu, entre une partie de la machine comportant le rouleau de tassage (6) et un module semeur (7) comportant les éléments semeurs, des moyens de couplage (15) amovibles, au moyen desquels différents modules semeurs (7), dont les nombres d'éléments semeurs et les distances entre les éléments semeurs (10) sont différents, peuvent être assemblés à la partie de machine comportant le rouleau de tassage (6).

6. Semoir selon l'une quelconque des revendications précédentes, dans lequel les éléments semeurs (10) peuvent être amenés dans plusieurs configurations différentes, dans lesquelles les éléments semeurs (10), disposés dans la trace d'une roue de tassage (16), sont agencés respectivement symétriquement par rapport au milieu de la trace de chaque roue de tassage (16).

7. Semoir selon l'une quelconque des revendications précédentes, dans lequel les éléments semeurs (10) peuvent être amenés dans plusieurs configurations différentes, dans lesquelles il est prévu respectivement une division uniforme entre les éléments semeurs (10).

8. Semoir selon l'une quelconque des revendications précédentes, dans lequel les roues de tassage (16) ont un profil uniforme sur leur largeur d'appui, en particulier un profil neutre sans division.

9. Semoir selon l'une quelconque des revendications précédentes, dans lequel le nombre de rangées par roue de tassage ($r_z$) satisfait à la relation suivante:

$$\frac{r_z}{r_{z+1}} \cong \frac{x_{rz+1}}{x_{rz}},$$

dans laquelle (x) désigne la distance entre deux éléments semeurs (10) adjacents avec le nombre de rangées ($r_z$) respectif.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19731862 A1
- DE 19882236 T1

- EP 0380020 A